# EUROPEAN PATENT APPLICATION

(11) **EP 4 717 743 A1**
(43) Date of publication of application: **01.04.2026**
(21) Application number: 24315442.4
(22) Date of filing: 26.09.2024
(51) Int. Cl.: C09D 183/06, C08G 77/14, G02B 1/14

(54) **METHOD FOR MANUFACTURING A POLYMERIZABLE COMPOSITION TO PRODUCE AN AQUEOUS-BASED HARD COAT**

(71) Applicant: ESSILOR INTERNATIONAL, 94220 Charenton-Le-Pont (FR)
(72) Inventor: Yu, Hui, 122210 Singapore (SG)
(74) Representative: Korakis-Ménager, Sophie

(57) **Abstract**

The invention relates to a method for making a polymerizable composition to produce an anti-abrasion hard coat which does not comprise adding organic solvent, the method consisting of (a) Stoichiometrically hydrolysing a tetraalkoxysilane compound bearing hydrolysable groups with HCl solution having a concentration between 0.025 to 0.05N to obtain a first composition; (b)Adding an epoxysilane monomer to the first composition; (c)Stirring the composition resulting from step (b); (d)Adding an excess amount of DI water for hydrolysing said epoxysilane, and lowering the HCl concentration under 0.025 mol.L⁻¹; (e)Adding a polymer catalyst under stirring.

## Description

### Technical field

The present invention relates to a method for manufacturing a polymerizable composition to produce a water-based hard coat solution having good anti-abrasion properties, the related polymerizable composition and the optical article containing said hard coat layer. This hard coat solution is intended to be applied on optical materials, in particular on optical substrates such as ophthalmic lenses.

### Background information and prior art

Over the past years, optical articles made of polymer material have become standard over traditional glass-made products. They present the advantages of being light, impact resistant, and can also be easily molded or colored with the application of several types of dyes. Nevertheless, they also have different drawbacks like been easily marred and scratched due to exposure to abrasives such as dust, cleaning equipment or ordinary weathering. Such exposure leads to transparency reduction, hence disturbing the view of the person wearing such material.

To overcome such problematics, optical materials are coated with one or several layers of hard coating solution at their surface. The layer of hard coat is formed after the solution is dried and cured. Therefore, hard coat solutions usually comprise organic solvents. What is usually required is that the solvent used in the composition enable a uniform and homogenous layer deposition on the substrate surface and that it stays so during the curing process.

For health and environment purposes, it is desirable to replace organic solvent with water. However, the quality of a hard coat solution relies on its mechanical properties (scratch and/or abrasion resistance) and on its optical properties, especially transparency. The solvent plays a crucial role in ensuring optimal stability of the ingredients contained in the hard coat composition. It also influences the surface tension which has an impact on the wetting properties of the liquid hard coat on the surface of the optical article and the cracking behavior of the hard coat during the curing process. For example, if there is formation of aggregates in the hard coat solution applied on the substrate, there will be a transparency loss due to visible light diffusion. The same effect can happen if the deposited layer of hard coat cracks. Therefore, the objective of replacing organic solvents with water is quite challenging.

In most aqueous hard coat composition, the addition of other organic solvents is still necessary. In order to produce a hard coat solution with the minimum amount of organic solvent possible, some polymerizable composition were elaborated with a process in which some solvents are generated during an acidic hydrolysis step.

Patent application WO2021/214198 A1 discloses a water-based composition to be used for the preparation of anti-abrasion coatings on ophthalmic lenses. The composition comprises: the product of hydrolysis of an epoxyalkoxysilane SiXY3, wherein X represents a monovalent organic group linked to the silicon atom through a carbon atom and containing at least one epoxy function and Y represents an alkoxy group; cationic nanoparticles comprising silica, wherein a water sol of said cationic particles is stable at acidic pH; an inorganic non-hydrogen Lewis acid; a surfactant, less than 0.5 wt% of a water miscible organic solvent less volatile than water. Moreover, the composition comprises no organic solvents other than said water miscible organic solvent, that are a product of hydrolysis of the epoxyalkoxysilane.

Organoaluminum compounds are widely used in polymerizable compositions for the manufacturing of optical material for their catalytic properties. However, according to the teachings of WO2021/214198 A1, during the process of making the hard coat solution and because of the organic nature of ligands complexing the metal ion, when a organoaluminum compound, such as aluminum acetylacetonate (Al(acac)₃) is employed in the hard coat composition instead of an inorganic non hydrogen Lewis acid, unsatisfactory results are obtained due to the lack of solubility in the liquid compositions.

It is therefore an object of the invention to provide a process to obtain a hard coat composition which can be stable for a long period while been stored at low temperature and which mechanical and optical properties remain optimal over time when applied on the surface of an optical article. It is also desired to obtain a hard coat solution with water as a main solvent. The only organic solvents allowed are those which only are resulting products from the hydrolysis of alkoxy, or epoxy silane compounds present in the composition and in a sufficient amount to use a chelate aluminum as a catalyst.

### Summary

The present invention therefore relates to a method for making a polymerizable composition to produce an anti-abrasive hard coat which does not comprise adding organic solvent, the method comprising the steps of:
(a)Hydrolysing a tetraalkoxysilane compound with HCl solution having a concentration between 0.025 to 0.05N to obtain a first composition.
(b)Adding a hydrolysable epoxysilane monomer to the first composition.
(c)Stirring the composition resulting from step (b)
(d)Adding an excess amount of DI water for hydrolysing said epoxysilane, and lowering the HCl concentration under 0.025 mol.L⁻¹
(e)Adding a polymer catalyst under stirring.
The solution can be optionally filtered in an additional step

According to another aspect of the invention, the method comprises also the following features alone or in combination:
- the polymerization composition does not contain any colloids
- the epoxy silane is (y-Glycidoxypropyl)trimethoxysilane
- a wetting agent is added to the mixture during step (d) and which is a polyether-modified siloxane
- a wetting agent is BYK 348.
- the polymer catalyst is an aluminum chelate.
- the polymer catalyst is Al(acac)₃.

Another embodiment disclosed in this patent application is a water-based polymerizable composition obtained by the said method. This composition present good stability when stored for several months.

According to another aspect of the invention, the polymerizable composition comprises also the following features:
- the polymerizable composition comprises a wetting agent in an amount ranging from 0.05 to 5% wt
- the polymerizable composition comprises Al(acac)₃ in an amount ranging from 0.5 to 0.6%wt
- the polymerizable composition comprises water in an amount higher than 20%wt.
- the ratio of organic solvent to water is lower than 1.8 after the hydrolysis of both alkoxy and epoxy silane.

A third embodiment disclosed is an optical article which comprise a layer of hard coat obtained by the curing of the polymerizable composition produced by the process disclosed. This hard coat layer present good anti-abrasion properties which can remain intact for several months.

According to another aspect of the invention, the polymerizable composition comprises also the following feature:
- the hard coat layer has a thickness of at least 1 µm.

### Detailed description of embodiments

The terms "comprise" (and any grammatical variation thereof, such as "comprises" and "comprising"), "have" (and any grammatical variation thereof, such as "has" and "having"), "contain" (and any grammatical variation thereof, such as "contains" and "containing"), and "include" (and any grammatical variation thereof, such as "includes" and "including") are openended linking verbs. They are used to specify the presence of stated features, integers, steps or components or groups thereof, but do not preclude the presence or addition of one or more other features, integers, steps or components or groups thereof. As a result, a method, or a step in a method, that "comprises," "has," "contains," "includes," or "consisting of" one or more steps or elements possesses those one or more steps or elements but is not limited to possessing only those one or more steps or elements.

The term "lens" means an organic or inorganic glass lens, preferably an organic lens, comprising a lens substrate having one or more surfaces which may be coated with one or more coatings of various natures.

The phrase "organic solvent" means any hydrocarbon-based liquid miscible in water for use in the current embodiments. Exemplary organic solvents comprise methanol, ethanol, butanol.

In the present description, unless otherwise specified, an optical article/material is understood to be transparent when the observation of an image through said optical article is perceived with no significant loss of contrast, that is, when the formation of an image through said optical article is obtained without adversely affecting the quality of the image. This definition of the term "transparent" can be applied to all objects qualified as such in the description, unless otherwise specified.

The following invention is a process to produce a water-based hard coat solution which would be applied on the surface of optical material as an anti-abrasion coating. The hard coat solution obtained from the said process present optimal mechanical and optical properties which are preserved over time when applied on substrate surfaces.

The process comprises hydrolyzing an alkoxysilane with an acidic solution, adding an epoxysilane, DI water, a polymer catalyst and additives. The mixture is then homogenized and cured.

The use of alkoxysilane is already well known in the field of coatings for optical material, since they provide good anti abrasion properties. The mixture of the alkoxysilane compounds with an acidic solution result in the hydrolysis of the Si-OR bonds (R being an alkyl group). The hydrolysis leads to the formation of the corresponding alcohol.

The range of concentration is chosen between 0.025 to 0.05N to favour a controllable hydrolysis of the silane compound, insuring the stability of the final solution. It also avoids the use of high amounts of alkoxy silane compounds which generally leeds to craks in the coating with normal thickness (2-3 µm).

The alkoxysilane chosen to prepare the hard coat solution would be a tetraalkoxysilane like illustrated in the following figure:

Si(OR)₄

Wherein R represents, alkyl group with at least one carbon.

This tetraalkoxysilane can be chosen between tetramethyl orthosilicate (TMOS), tetraethyl orthosilicate (TEOS), tetraisopropyl orthosilicate or tetrabutyl orthosilicate. Other polyalkoxysilanes compounds could also be employed.

After mixing the tetraalkoxysilane with the acidic solution to generate the first hydrolysis, an epoxysilane compound is added in the mixture which is then stirred to be homogenized. According to the invention, the epoxysilane chosen would preferably have at least 2 alkoxy groups, preferably 3 alkoxy groups such as methoxy (-OCH₃) or ethoxy (-OCH₂CH₃) groups or any mixture thereof. Examples of epoxysilanes which can be used for the present invention are γ-glycidoxypropyltrimethoxysilane (GLYMO), γ-glycidoxypropyltriethoxysilane, (3,4-epoxycyclohexyl)ethyltrimethoxysilane and (3,4-epoxycyclohexyl)ethyltriethoxysilane, 3-Glycidoxypropylmethyldiethoxysilane. These examples do not limit the choice of epoxysilanes which could be used for the process for making the polymerizable composition.

Once the mixture has been homogenized, a large excess of deionized water is included. The amount should be at least 10 % wt over the total amount of the hard coat solution. The addition of DI water generates the hydrolysis of the epoxysilane compound which contributes to the formation of polar and protic solvent and the corresponding epoxysilanol.

To promote the polymerization of the monomers, a Lewis acid-based catalyst is used to generate the formation of ether bonds via opening of the epoxy rings. Usually, the catalyst employed is an inorganic non-hydrogen-based Lewis acid, such as an inorganic salt of a multivalent metal. Aluminum salts such as aluminum (III) perchlorate (Al(ClO₄)₃) can be used for epoxide ring opening synthesis, but are strong acids which could temper the stability of the solution.The catalyst used for the polymerization, is preferably an aluminum chelate for the ligands can either a structure represented by (I) or (II):

(I) M1OCCH₂COM2

(II) M3OCCH₂COOM4

Wherein M1, M2, M3 and M4 are independently chosen from alkyl groups from 1 to 10 carbon atoms. The aluminum complex-based catalyst can be chosen among aluminum acetylacetonate, aluminum ethylacetoacetate bisacetylacetonate, aluminum bisethylacetoacetate acetylacetonate, aluminum di-n-butoxide monoethylacetoacetate and aluminum dipropoxide monomethylacetoacetate. Preferably, the catalyst used is aluminum acetylacetonate (Al(acac)₃). These examples do not limit the choice of catalyst which could be used for the process for making the polymerizable composition.

The efficiency of the catalyst relies on the amount of organic solvent produced during the hydrolysis of both the alkoxysilane and the epoxy silane. Because organic ligands tend to have solubility issues in water-based solution, the inventor determined that the ratio of the total amount of solvent generated during the hydrolysis over the total amount of water left should be lower than 1.8 and preferably above 0.2.

In one embodiment, the process of making the anti-abrasion hard coat solution does not require using cationic particles. It is usually costumed to use cationic particles in coating solution to provide a stable acidic pH in the composition while also ensuring their compatibility with the rest of the elements used in the polymerizable composition. Avoiding particles which could not be compatible with the polymerizable composition, selecting an organo aluminum complex as catalyst and controlling the concentration and amount of the Lewis acid used for the hydrolysis are a good alternative to ensure the stability of the hard coat solution. It allows the increase of anti-abrasion properties due to the high cross-linking of the hydrolyzed alkoxysilane. Furthermore, it also has the advantage of significantly decreasing the cost of hard coat solution manufacturing.

The hard coat composition comprises also a surfactant which amount is preferably comprised between 0.1 to 0.2% wt relative to the total weight of the hard coat solution. Several commercially available surfactants can be used such as BYK347, BYK348 and BYK3455 provided by BYK, Borchi Gol LA50 by OMG Borchers, Capstone FS35 by DuPont and Megaface F477 by DIC. These examples do not limit the choice of the surfactant which could be used for the process for making the polymerizable composition.

Another object of the present invention is a polymerizable composition for making an anti-abrasion hard coat produced by:
(a) Stoichiometrically hydrolysing a tetraalkoxysilane compound bearing hydrolysable groups with HCl solution having a concentration between 0.025 to 0.05N to obtain a first composition.
(b) Adding a hydrolysable epoxysilane monomer to the first composition.
(c)Stirring the composition resulting from step (b)
(d)Adding an excess amount of DI water for hydrolysing said epoxysilane, and lowering the HCl concentration under 0.025 mol.L⁻¹
(e)Adding a polymer catalyst under stirring and optionally filtering the solution.

This composition comprises the products obtained the hydrolysis of the alkoxysilane and epoxysilane monomers which are respectively the corresponding silanol and epoxysilanol. When cured, the epoxysilanol generates a polymer network which mainly constitute the hard coat layer.

As main solvents, the solution is constituted of the organic solvents generated during the hydrolysis of the alkoxysilane and the epoxysilane and water. The amount of organic solvent generated should be sufficient to allow the solubilization of the catalyst. The ratio of the total amount of organic solvent generated during the hydrolysis over the total amount of water left should be lower than 1.8 and preferably above 0.2. In an embodiment, the water amount should be higher than 20%wt. This range of ratios allows a good solubility for the organo aluminum catalyst to correctly perform the polymerization reaction.

The composition contains the aluminum complex serving as a catalyst to perform the polymerization of the epoxysilane monomer. The said catalyst is present in an amount ranging from 0.5 to 0.6%wt.

This hard coat solution also comprises a wetting agent as an additive, in an amount ranging from 0.05 to 5% wt.

A third object of the present invention is an optical article comprising an anti-abrasion hard coat layer made from a polymerization composition produced by:
(a) Stoichiometrically hydrolysing a tetraalkoxysilane compound bearing hydrolysable groups with HCl solution having a concentration between 0.025 to 0.05N to obtain a first composition.
(b) Adding a hydrolysable epoxysilane monomer to the first composition.
(c)Stirring the composition resulting from step (b)
(d)Adding an excess amount of DI water for hydrolysing said epoxysilane, and lowering the HCl concentration under 0.025 mol.L⁻¹
(e)Adding a polymer catalyst under stirring and optionally filtering the solution.

It was discovered by the inventor that when applied on the substrate, the hard coat layer with a thickness of at least 1 µm offers equivalent or better anti-abrasion properties than other type of hard coats which anti-abrasion properties are efficient at usual thicknesses applied (2-3 µm). Furthermore, the solid content of the hard coat solution applied on the optical article is around 25%, which enables the making of hard coat layer with thicknesses between 1 and 2 µm.

In one embodiment, the substrate may be coated with one or more functional coatings prior to depositing the coating of the invention. These functional coatings traditionally used in optics may be, for example an impact-resistant primer layer, a polarizing coating, a photochromic coating or a tinted coating. Additional coatings may be further deposited on the abrasion-resistant coating of the invention such as interferential coatings (antireflective or mirror coatings).

### Example

### Chemicals used

A hard coat solution was prepared by combining a tetraalkoxysilane (Tetraethyl orthosilicate (TEOS), CAS No.78-10-4), 0.03 mol.L⁻¹ HCl: CAS No.: 7647-01-0, an epoxy silane (3-(2,3-epoxypropoxy)propyl]trimethoxysilane (GLYMO, CAS No. 2530-83-8), a wetting agent (BYK 348), an polymer catalyst (Al(acac)₃, Cas No. 13963-57-0) and DI water.

### Preparation process:

12 g of TEOS were introduced a conical flask equipped with a water bath on a hotplate. 4 g of a 0.03 mol.L⁻¹ solution of HCl were added and the mixture was stirred under 700 rpm for 1h at ambient temperature. 7.34 g of GLYMO were then introduced into the flask and the mixture was stirred at ambient temperature for 30 minutes. 10 g of DI water were added dropwise in 5 minutes into the flask under stirring. After 30 minutes of stirring, 0.54 g of BYK 348 and 0.18 g of Al(acac)₃ were included into the flask and the mixture was stirred for 30 minutes. The solution was then filtered by using a 3 µm filter and stored at 5°C for application.

### Coating application and testing methods:

ORMA^{®} lenses samples were coated with the hard coat solution prepared above to test the stability in 5°C. A sample was coated one day after the solution was prepared. The solution was then stored at 5°C for a month and applied on another lens sample. The process was then repeated for a second month. The solution was applied with the following speed rate: 700 rpm for 3 seconds, 1000 rpm for 5 seconds and 1800 rpm for 15 seconds. The samples were precured at 75°C for 15 minutes and post-cured at 100°C for 3 hours.

### Abrasion resistance ("Baver sand test")

The coated lens was subjected to abrasion in an oscillating abrasive box using sand (about 500 g) for 1 cycle of 300 forward and back motions. An amount or degree of abrasion was measured by the change in haze of the article (measured with a hazemeter). Performance results were expressed as the ratio of the haze for a reference lens to the haze for a modified lens, (Bayer value = haze of the standard / haze of the sample).

### Scratch resistance ("Hand steel Wool test hereafter" HSW)

The HSW test was implemented on the convex side of the lens only. If an anti-reflective coating is deposited on the lens, a waiting time of 24 hours after the deposition of said anti-reflective coating is respected before performing the test.

The lens was manually abraded with extra fine (000#) steel wool, performing 5 back and forth movements (with an amplitude from 4 to 5 cm) keeping constant pressure on the steel wool with the index fin ger. The pressure applied on the steel wool can be evaluated with a balance: fix the lens on the balance plate with adhesive tape and press down the lens with the index finger with the same strength as the one used when abrading the lens with the steel wool. This strength is about 5 kg during the forward movements and about 2.5 kg during the backward movements. Lenses were visually inspected and given a HSW value according to the following table. The higher the HSW value, the more abraded the lens is.

The following table shows the performance of the aqueous hard coat solution stored at 5°C in various time.

ORMA@ lenses samples were also coated with Samples were HC-1 hard coat as a reference example. HC-1 is a commercially available hard coat solution disclosed in example 3 of patent EP 0614957 (of refractive index equal to 1.47 and of 3.5 µm thickness), based on a hydrolyzate of GLYMO and DMDES (dimethyl diethoxysilane), colloidal silica and aluminium acetylacetonate, then an antireflection multilayer interference coating according to the invention.

Sand bayer tests performed on the hard coat solution disclosed in patent application WO2021214198 and applied on ORMA^{®} lens substrates samples were also included as a reference example.

| Time storage at 5°C (month) | Hard coat solution | Lens substrate | Thickness (µm) | Sand Bayer | HSW |
|---|---|---|---|---|---|
| 0 | Water-based hard coat | ORMA^{®} | 1.1 | 5.6 | 3 |
| 1 | Water-based hard coat | ORMA^{®} | 1.9 | 5.3 | 3 |
| 2 | Water-based hard coat | ORMA^{®} | 2.3 | 4.5 | - |
| 0 | HC-1 | ORMA^{®} | 3-4 | 3.8-4.5 | - |
| 0 | WO2021214198 hard coat | ORMA^{®} | 3-4 | 4.0-4.6 | 3 |

Several points can be noticed when analyzing the results obtained. When focusing on the water-based hard coat of the disclosed invention, the results shows that even after 2 months, the anti-abrasion properties are well preserved, since the Sand Bayer values are still high. The thickness of the layer obtained from water-based hard coat increases because the viscosity slightly increases after storage.

When comparing the results obtained from the water-based hard coat from the disclosed invention and those obtained from the reference examples, the sand-bayer results are higher for the said water-based with a thickness layer of approximatively 1 µm whereas for the reference examples, such results are achieved with thicker layers applied on the lens substrate.

## Claims

1. A method for making a polymerizable composition to produce an anti-abrasion hard coat which does not comprise adding organic solvent, the method comprising the following steps of:
(a) Stoichiometrically hydrolyzing a tetraalkoxysilane compound with HCl solution having a concentration between 0.025 to 0.05N to obtain a first composition.
(b) Adding a hydrolysable epoxysilane monomer to the first composition.
(c)Stirring the composition resulting from step (b).
(d)Adding an excess amount of DI water for hydrolyzing said epoxysilane, and lowering the HCl concentration under 0.025 mol.L⁻¹.
(e)Adding a polymer catalyst under stirring.

2. The method according to claim 1, wherein the polymerization composition does not contain any colloids.

3. The method according to claim 1 or 2, wherein the epoxy silane is (γ-Glycidoxypropyl)trimethoxysilane.

4. The method according to anyone of claim 1 to 3, wherein a wetting agent is added to the mixture during step (d) and which is a polyether-modified siloxane.

5. The method according to anyone of claim 1 to 4, wherein a wetting agent is BYK 348.

6. The method/process according to anyone of claim 1 to 5, wherein the polymer catalyst is an aluminum chelate.

7. The method/process according to anyone of claim 1 to 6, wherein the polymer catalyst is Al(acac)₃.

8. A polymerizable composition for making an anti-abrasion hard coat produced by:
(a) Stoichiometrically hydrolyzing a tetraalkoxysilane compound with HCl solution having a concentration between 0.025 to 0.05N to obtain a first composition.
(b) Adding a hydrolysable epoxysilane monomer to the first composition.
(c)Stirring the composition resulting from step (b)
(d)Adding an excess amount of DI water for hydrolysing said epoxysilane, and lowering the HCl concentration under 0.025 mol.L⁻¹
(e)Adding a polymer catalyst under stirring.

9. A polymerizable composition according to anyone of claim 8, wherein the polymerizable composition comprises a wetting agent in an amount ranging from 0.05 to 5% wt.

10. A polymerizable composition according to anyone of claim 8 to 9, wherein the polymerizable composition comprises Al(acac)₃ in an amount ranging from 0.5 to 0.6% wt.

11. A polymerizable composition according to anyone of claim 8 to 10, wherein the polymerizable composition comprises Water in an amount higher than 20% wt.

12. A polymerizable composition according to anyone of claim 8 to 11, wherein the ratio of organic solvent to water is lower than 1.8 after the hydrolysis of both alkoxy and epoxy silane.

13. An optical article comprising an anti-abrasion hard coat layer made from a polymerization composition produced by:
(a) Stoichiometrically hydrolyzing a tetraalkoxysilane compound with HCl solution having a concentration between 0.025 to 0.05N to obtain a first composition.
(b) Adding a hydrolysable epoxysilane monomer to the first composition.
(c)Stirring the composition resulting from step (b).
(d)Adding an excess amount of DI water for hydrolysing said epoxysilane, and lowering the HCl concentration under 0.025 mol.L⁻¹
(e)Adding a polymer catalyst under stirring.

14. The optical lens according to claim 14, wherein the hard coat layer has a thickness of at least 1 µm.
